(19) Europäisches Patentamt
European Patent Office
Office européen des brevets

(11) EP 4 318 626 A1

(12) **EUROPEAN PATENT APPLICATION**

(43) Date of publication:
**07.02.2024 Bulletin 2024/06**

(21) Application number: **23189319.9**

(22) Date of filing: **02.08.2023**

(51) International Patent Classification (IPC):
***H01M 4/04*** *(2006.01)* ***H01M 4/139*** *(2010.01)*
***H01M 4/36*** *(2006.01)* ***H01M 10/0525*** *(2010.01)*

(52) Cooperative Patent Classification (CPC):
**H01M 4/0404; H01M 4/139; H01M 4/366; H01M 10/0525**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **03.08.2022 KR 20220096844**

(71) Applicants:
- **Samsung SDI Co., Ltd.**
  **Yongin-si, Gyeonggi-do 17084 (KR)**
- **Korea University Research and Business Foundation**
  **Seoul 02841 (KR)**

(72) Inventors:
- **PARK, Gwangwon**
  **17084 Yongin-si (KR)**
- **AHN, Won-Gi**
  **17084 Yongin-si (KR)**
- **JEONG, Min-young**
  **17084 Yongin-si (KR)**
- **LEE, Taeil**
  **17084 Yongin-si (KR)**
- **BAE, Juhye**
  **17084 Yongin-si (KR)**
- **PARK, Jin Seok**
  **17084 Yongin-si (KR)**
- **JUNG, Hyun Wook**
  **02841 Seoul (KR)**
- **LEE, Kwan Young**
  **02841 Seoul (KR)**

(74) Representative: **Marks & Clerk LLP**
**15 Fetter Lane**
**London EC4A 1BW (GB)**

(54) **METHOD OF PREPARING NEGATIVE ELECTRODE FOR RECHARGEABLE LITHIUM BATTERY AND RECHARGEABLE LITHIUM BATTERY INCLUDING NEGATIVE ELECTRODE**

(57) Disclosed are a method of preparing a negative electrode for a rechargeable lithium battery and a rechargeable lithium battery including the negative electrode, and the method of preparing the negative electrode comprises preparing an active material layer on a current collector so that a coating portion in which an active material layer is formed and an uncoated region in which an active material is not formed are alternatively arranged, wherein the coating portion in which the active material layer is formed is performed by coating a first negative active material layer composition having a capillary number of about 0.25 to about 1.50 on the current collector and coating a second negative active material layer composition having a capillary number of about 0.28 to about 1.50 on the first negative active material layer composition.

FIG. 2

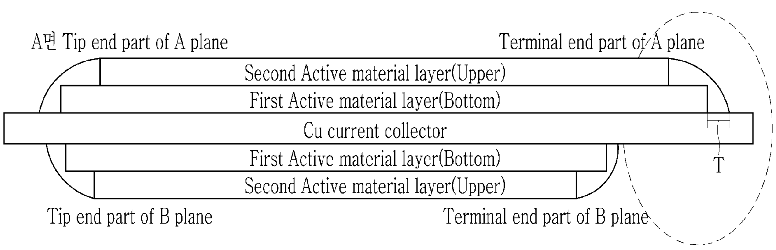


EP 4 318 626 A1

## Description

## BACKGROUND OF THE INVENTION

### (a) Field of the Invention

It relates to a method of preparing a negative electrode for a rechargeable lithium battery and a rechargeable lithium battery including a negative electrode.

### (b) Description of the Related Art

Recently, the rapid supplement of electronic devices such as mobile phones, laptop computers, and electric vehicles using batteries require surprising increases in demand for rechargeable batteries with relatively high capacity and lighter weight.

Such rechargeable lithium batteries may be widely used in various forms such as cylindrical batteries, pouch batteries, and the like. In the preparation of electrode used in the battery, a pattern coating is mainly applied when coating an electrode slurry on a current collector. The pattern coating is performed by coating an electrode slurry on a part of a current collector to form an active material layer and to form an uncoated region in which an active material is not formed and it is essential that the active material layer, i.e. coated region, and uncoated region, i.e. no-coated region are accurately coated to a designed length. Furthermore, it is important to control the coating speed and drag of the end portion of coating according to discharge and interruption of the slurry.

## SUMMARY OF THE INVENTION

One embodiment provides a method of preparing a negative electrode for a rechargeable lithium battery, effectively capable of performing a pattern coating.

Another embodiment provides a rechargeable lithium battery including the negative electrode prepared by the method.

One embodiment provides a method of preparing a negative electrode for a rechargeable lithium battery, including preparing an active material layer on a current collector so that a coating portion in which an active material layer is formed and an uncoated region in which an active material is not formed are alternatively arranged, wherein the coating portion in which the active material layer is formed is performed by coating a first negative active material layer composition having a capillary number of about 0.25 to about 1.50 on the current collector and coating a second negative active material layer composition having a capillary number of about 0.28 to about 1.50 on the first negative active material layer composition.

The coating the first negative active material layer composition on the current collector and the coating the second negative active material layer composition on the first negative active material layer composition may be simultaneously performed.

The first negative active material layer composition may have a solid content of about 42 wt% to about 80 wt% based on the total 100 wt%, of the first negative active material layer composition, and the second negative active material layer composition may have a solid content of about 41 wt% to about 80 wt% based on the total 100 wt%, of the second negative active material layer composition.

The first negative active material layer composition may include a first thickener and an amount of the first thickener may be about 0.006 wt% to about 0.012 wt% based on the total 100 wt%, of the first negative active material layer composition, and the second negative active material layer composition may include a second thickener and an amount of the second thickener may be about 0.007 wt% to about 0.013 wt% based on the total 100 wt%, of the second negative active material layer composition.

The first negative active material layer composition may have a capillary number of about 0.25 to about 0.82. In addition, the second negative active material layer composition may have a capillary number of about 0.28 to about 0.85.

A difference of the capillary number between the first negative active material layer composition and the second negative active material layer composition may be about 0.03 to about 1.25.

According to another embodiment, a rechargeable lithium battery including the negative electrode prepared by the method; a positive electrode; and an electrolyte.

At least some of the above and other features of the invention are set out in the claims.

The method of preparing the negative electrode according to one embodiment may effectively perform a pattern coating and may uniformly prepare an active material layer.

## BRIEF DESCRIPTION OF THE DRAWINGS

FIG. 1 is a schematic diagram showing a rechargeable lithium battery according to one embodiment.

FIG. 2 is a drawing showing a length of drag occurred in the negative electrode preparation of the rechargeable lithium battery.

FIG. 3 is an image for preparing the negative electrode according to Example 1.

FIG. 4 is an image showing drag occurred during the preparation the negative electrode according to Comparative Example 1.

## DETAILED DESCRIPTION OF THE INVENTION

Hereinafter, embodiments of the present invention are described in detail. However, these embodiments are merely examples, the present invention is not limited thereto, and the present invention is defined by the scope of claims.

A method of preparing a negative electrode for a rechargeable lithium battery according to one embodiment includes preparing an active material layer on a current collector so as to alternatively arrange a coated region in which an active material layer is formed and an uncoated region in which an active material layer is not formed.

Generally, the negative electrode preparation including coating an active material layer composition on a current collector may be classified into a stripe process and a pattern process.

The negative electrode preparation according to one embodiment relates to a pattern process in which a coated region is formed by coating an active material composition on a current collector and an uncoated region is alternatively formed and not coating the active material composition.

The stripe process refers to a process in which a coating is continuously performed in the direction of moving a current collector.

Such a stripe process and a pattern process will be well understood to one of ordinary skilled in the related art.

The negative electrode preparation according to one embodiment may include, in the pattern coating, that the coated region in which the active material layer is formed may be prepared by coating a first negative active material layer composition with a capillary number (Ca) of about 0.25 to about 1.50 on a current collector and coating a second negative active material layer composition with a capillary number of about 0.28 to about 1.50 on the first negative active material layer composition.

In one embodiment, the coating the first negative active material layer composition on the current collector and the coating the second negative active material layer composition on the first negative active material layer composition may be simultaneously performed. As such, the simultaneous coating may sequentially form the first active material layer and the second active material layer on the current collector.

When the first negative active material layer composition and the second negative active material layer composition have the capillary numbers within the range, the problems related to dragging end portion of the coating portion that may occur due to discharging and discharge stopping of composition for forming the coated region and the uncoated region during the pattern coating may be effectively prevented.

The problems of dragging the end portion of the coating portion refers to the phenomenon when the application of the composition is stopped at the end of the coated region, and the coating equipment is fixed, while the current collector to be coated is moved, for example, by roll to roll equipment, the composition does not immediately stop, but is dragged, forming an active material layer with a gradually decreased thickness. Such problems related to dragging may cause the electrode to be discarded, deterioration of stability, or occurrence of fire. These drag problems, in particular, as in one embodiment, may occur more severely when the negative active material layer is formed in two layers, including a first negative active material layer and a second negative active material layer, and when it is illustrated in more detail, the drag of the second negative active material layer corresponding to the upper portion may occur more severely, resulting in regions where only the second negative active material layer is formed.

These dragging problems do not occur when the negative active material layer is formed in the stripe process, so that it is not necessary to solve the problems when the stripe process is performed.

In one embodiment, the capillary numbers of the first negative active material layer composition and the second negative active material layer composition are adjusted into the range, thereby effectively preventing the drag problem. In another embodiment, the first negative active material layer composition may have a capillary number of about 0.25 to about 0.82, or about 0.25 to about 0.7, and the second negative active material layer composition may have a capillary number of about 0.28 to about 0.85, or about 0.28 to about 0.73.

In particular, the first negative active material layer composition with the capillary number of about 0.25 to about 1.50 may effectively suppress the drag problems.

When the capillary number of the first negative active material layer composition is out of the range of about

0.25 to about 1.50 range, or the capillary number of the second negative active material layer composition is out of the range of about 0.28 to about 1.50, the drag in the active material layer preparation may significantly occur, the loading level of the negative active material layer in a length direction becomes non-uniform, and the coating quality is deteriorated.

In one embodiment, the capillary number refers to a ratio (dimensionless process variables) of viscous force and a surface tension at an interface. The capillary number may be obtained by Equation 1.

[Equation 1]

$$Ca=(\eta X\ U_{web})/\sigma$$

(In Equation 1, $U_{Web}$ is a coating speed (m/s), $\eta$ is a viscosity (mPa·s) at a shear rate in coating, and $\sigma$ is a surface tension (mNm) of a slurry. For the avoidance of doubt, X is a multiplication symbol.) The viscosity $\eta$ may be measured at room temperature, for example 20 °C to 25 °C, in particular 25 °C. The surface tension $\sigma$ of the slurry may be obtained by dropwise adding a slurry on a Cu substrate to measure a contact angle and calculating using the contact angle via a computer program according to a Sessile Drop method. The coating speed $U_{web}$ may be in the range of 0.06 m/s to 2.5 m/s.

In one embodiment, such a capillary number may be obtained by adjusting time for mixing, a negative active material, a binder, a thickener, and optionally, a conductive material in the first and second negative active material layers compositions preparation.

For example, when the time for mixing is performed for about 160 minutes to about 240 minutes, a first negative active material layer composition with a Ca of about 0.25 to about 1.50 may be obtained. In addition, the mixing for about 170 minutes to about 240 minutes may provide a second negative active material layer composition with a Ca of about 0.28 to about 1.50 may be obtained.

In one embodiment, the difference between the capillary number of the first negative active material layer composition and the capillary number of the second negative active material layer composition may be about 0.03 to about 1.25. In another embodiment, the capillary number of the second negative active material layer composition may be about 0.03 to about 1.25 higher than the capillary number of the first negative active material layer composition. Alternatively, the capillary number of the first negative active material layer composition may be about 0.03 to about 1.22 higher than the capillary number of the second negative active material layer composition.

In another embodiment, the capillary number may be also obtained by controlling amounts of the solids (amounts of a negative active material, a binder, a thickener, and optionally, a conductive material) in the first and the second negative active material compositions. For example, in the negative active material layer composition, when an amount of the solids is about 42 wt% to about 80 wt% based on the total 100 wt% of the negative active material composition (including a solvent), a Ca may be turn to be about 0.25 to about 1.50. When the amount of the solid is about 41 wt% to about 80 wt% based on the total 100 wt% of the negative active material layer composition (including a solvent), a Ca may be turn to be about 0.28 to about 1.50.

Alternatively, the capillary number may be also obtained by controlling an amount of the thickener in the first and second negative active material layer compositions. When the amount of the thickener is about 0.006 wt% to about 0.012 wt% (excluding a solvent) based on the total 100 wt% of the negative active material layer composition (excluding solvent), a Ca may be about 0.25 to about 1.50. When the amount of the thickener is about 0.007 wt% to about 0.013 wt% (excluding a solvent) based on the total 100 wt% of the negative active material layer composition (excluding solvent), a Ca may be about 0.28 to about 1.50.

To explain this, it is as below.

The first negative active material layer composition may include a first negative active material, a first binder and a first thickener, and the second negative active material layer composition may include a second negative active material, a second binder and a second thickener. Herein, the first negative active material layer composition may include the first thickener at an amount of 0.006 wt% to about 0.012 wt% based on the total 100 wt%, of the first negative active material layer composition, and the second negative active material layer composition may include the second thickener at an amount of about 0.007 wt% to about 0.013 wt% based on the total 100 wt%, of the second negative active material layer composition.

If the amounts of the first thickener and the second thickener included in the first and second negative active material layer compositions are out of the ranges, the desired capillary numbers may be exceeded, which is not appropriate.

The first binder and the second binder may be the same or different from each other. The first binder and the second binder may bind the negative active material particles with one another and with a current collector. The binder may be a non-aqueous binder, an aqueous binder, or combinations thereof. According to one embodiment, the binder may be the aqueous binder.

The non-aqueous binder may be an ethylene propylene copolymer, polyacrylonitrile, polystyrene, polyvinylchloride, carboxylated polyvinylchloride, polyvinylfluoride, polyurethane, polytetrafluoroethylene, polyvinylidene fluoride, polyethylene, polypropylene, polyamideimide, polyimide, or combinations thereof.

The aqueous binder may be a styrene-butadiene rubber (SBR), acrylated styrene-butadiene rubber (ABR), acrylonitrile-butadiene rubber, an acryl rubber, a butyl rubber, a fluorine rubber, an ethylene oxide-included polymer, polyvinyl pyrrolidone, polypropylene, polyepichlorohydrin, polyphosphazene, an ethylene propylenediene copolymer, polyvinyl pyridine, chlorosulfonated polyethylene, latex, a polyester resin, an acryl resin, a phenol resin, an epoxy resin, polyvinyl alcohol, or combinations thereof.

The first thickener and the second thickener may be the same, or different from each other, and may be a cellulose-based compound.

The cellulose-based compound may be one or more of carboxymethyl cellulose, hydroxypropylmethyl cellulose, methyl cellulose, or alkali metal salts thereof. The alkali metal may be Na, K, or Li. The coating process may be performed by any process well known in the related arts. Furthermore, after the coating is performed, a drying and a pressurizing may be performed by general techniques performed in the negative electrode preparation.

In one embodiment, the first negative active material layer includes a first negative active material, and the second negative active material layer includes a second negative active material, and the first negative active material and the second negative active material may be the same or different from each other. The first negative active material and the second negative active material may be a Si and carbon composite, graphite, or combinations thereof.

The Si and carbon composite may include Si particles and a first carbon-based material. The first carbon-based material may be amorphous carbon or crystalline carbon. An example embodiment of the composite may include a core in which Si particles and a second carbon-based material are mixed, and a third carbon-based material surrounding the core. The second carbon-based material and the third carbon-based material may be the same or different from each other, and may be amorphous carbon or crystalline carbon.

The amorphous carbon may be pitch carbon, soft carbon, hard carbon, mesophase pitch carbide, sintered cokes, carbon fiber, or combinations thereof, and the crystalline carbon may be artificial graphite, natural graphite, or combinations thereof.

The Si particle may have a particle diameter of about 10 nm to about 30 μm, and according to one embodiment, may be about 10 nm to about 1000 nm, or according to another embodiment, may be about 20 nm to about 150 nm. When the particle diameter of the Si particle is within the range, the volume expansion caused during charge and discharge may be suppressed, and a breakage of the conductive path due to crushing of the particle may be prevented.

In the specification, a particle diameter may refer to an average particle diameter of the particles. Herein, the average particle diameter may mean a particle diameter (D50) by measuring cumulative volume. When a definition is not otherwise provided, such a particle diameter (D50) indicates an average particle diameter (D50) where a cumulative volume is about 50 volume% in a particle distribution.

The average particle size (D50) may be measured by a method well known to those skilled in the art, for example, by a particle size analyzer, or also by a transmission electron microscopic image or a scanning electron microscopic image. Alternatively, a dynamic light-scattering measurement device is used to perform a data analysis, and the number of particles is counted for each particle size range. From this, the average particle diameter (D50) value may be easily obtained through a calculation.

If the Si and carbon composite includes the Si particles and the first carbon-based material, an amount of the Si particles may be about 30 wt% to about 70 wt%, or according to one embodiment, about 40 wt% to about 50 wt%. An amount of the first carbon-based material may be about 70 wt% to about 30 wt%, or according to one embodiment, may be about 60 wt% to about 50 wt%. When the amounts of the Si particles and the first carbon-based material are within the range, high-capacity characteristic may be exhibited.

When the Si and carbon composite includes a core in which Si particles and the second carbon-based material are mixed, and a third carbon-based material surrounding the core, the third carbon-based material may be presented in a thickness of about 5 nm to about 100 nm. In addition, the third carbon-based material may be presented in an amount of about 1 wt% to about 50 wt% based on the total 100 wt%, of the Si and carbon composite, the Si particles may be present in amount of about 30 wt% to about 70 wt% based on the total 100 wt%, of the Si and carbon composite, and the second carbon-based material may be present in an amount of about 20 wt% to about 69 wt% based on the total 100 wt%, of the Si and carbon composite. In the case of satisfying the amounts of the Si particles, the third carbon-based material, and the second carbon-based material within the range, better discharge may be exhibited, and the capacity retention may be improved.

In one embodiment, the first negative active material or the second negative active material may further include crystalline carbon. The crystalline carbon may be artificial graphite, natural graphite, or combinations thereof.

If the first negative active material or the second negative active material further includes crystalline carbon, a mixing ratio of crystalline carbon and the Si-carbon composite may be about 0.1 :99.9 wt% to about 95.2:4.8 wt%, about 50:50 wt% to about 95:5 wt%, or about 60:40 to about 95:5 weight. When the mixing ratio of crystalline carbon and the

Si-carbon composite is within the range, the volume expansion of the negative active material may be more effectively suppressed, and the conductivity may be more improved.

In addition, the first negative active material layer composition and the second negative active material layer composition may further include a conductive material, respectively. The conductive material is included to provide electrode conductivity, and any electrically conductive material may be used as a conductive material unless it causes a chemical change. Examples of the conductive material may be a carbon-based material such as natural graphite, artificial graphite, carbon black, acetylene black, ketjen black, a carbon fiber, and the like; a metal-based material of a metal powder or a metal fiber including copper, nickel, aluminium, silver, and the like; a conductive polymer such as a polyphenylene derivative; or a mixture thereof.

In one embodiment, when the first negative active material layer includes the first negative active material, the first binder and the conductive material, an amount of the first negative active material may be about 94 wt% to about 99 wt% based on the total 100 wt%, of the first negative active material layer. Furthermore, when the second negative active material layer includes the second negative active material, the second binder and the conductive material, an amount of the second negative active material may be about 93 wt% to about 98 wt% based on the total 100 wt% of the second negative active material layer in the second negative active material layer. In addition, in the first and second negative active material layers, an amount of the conductive material may be balanced.

The current collector may include one selected from a copper foil, a nickel foil, a stainless steel foil, a titanium foil, a nickel foam, a copper foam, a polymer substrate coated with a conductive metal, and a combination thereof, but is not limited thereto.

A rechargeable lithium battery according to another embodiment provides the negative electrode prepared by the method, a positive electrode and an electrolyte.

The positive electrode includes a current collector and a positive active material layer formed on the current collector.

The positive active material may include lithiated intercalation compounds that reversibly intercalate and deintercalate lithium ions. Specifically, one or more composite oxides of a metal selected from cobalt, manganese, nickel, and a combination thereof, and lithium, may be used. More specifically, the compounds represented by one of the following chemical formulae may be used. $Li_aA_{1-b}X_bD_2$ ($0.90 \le a \le 1.8$, $0 \le b \le 0.5$); $Li_aA_{1-b}X_bO_{2-c}D_c$ ($0.90 \le a \le 1.8$, $0 \le b \le 0.5$, $0 \le c \le 0.05$); $Li_aE_{1-b}X_bO_{2-c}D_c$ ($0.90 \le a \le 1.8$, $0 \le b \le 0.5$, $0 \le c \le 0.05$); $Li_aE_{2-b}X_bO_{4-c}D_c$ ($0.90 \le a \le 1.8$, $0 \le b \le 0.5$, $0 \le c \le 0.05$); $Li_aNi_{1-b-c}Co_bX_cD_\alpha$ ($0.90 \le a \le 1.8$, $0 \le b \le 0.5$, $0 \le c \le 0.5$, $0 < \alpha \le 2$); $Li_aNi_{1-b-c}Co_bX_cO_{2-\alpha}T_\alpha$ ($0.90 \le a \le 1.8$, $0 \le b \le 0.5$, $0 \le c \le 0.5$, $0 < \alpha < 2$); $Li_aNi_{1-b-c}Co_bX_cO_{2-\alpha}T_2$ ($0.90 \le a \le 1.8$, $0 \le b \le 0.5$, $0 \le c \le 0.5$, $0 < \alpha < 2$); $Li_aNi_{1-b-c}Mn_bX_cD_\alpha$ ($0.90 \le a \le 1.8$, $0 \le b \le 0.5$, $0 \le c \le 0.5$, $0 < \alpha \le 2$); $Li_aNi_{1-b-c}Mn_bX_cO_{2-\alpha}T_\alpha$ ($0.90 \le a \le 1.8$, $0 \le b \le 0.5$, $0 \le c \le 0.5$, $0 < \alpha < 2$); $Li_aNi_{1-b-c}Mn_bX_cO_{2-\alpha}T_2$ ($0.90 \le a \le 1.8$, $0 \le b \le 0.5$, $0 \le c \le 0.5$, $0 < \alpha < 2$); $Li_aNi_bE_cG_dO_2$ ($0.90 \le a \le 1.8$, $0 \le b \le 0.9$, $0 \le c \le 0.5$, $0.001 \le d \le 0.1$); $Li_aNi_bCo_cMn_dG_eO_2$ ($0.90 \le a \le 1.8$, $0 \le b \le 0.9$, $0 \le c \le 0.5$, $0 \le d \le 0.5$, $0 \le e \le 0.1$); $Li_aNi_bCo_cAl_dG_eO_2$ ($0.90 \le a \le 1.8$, $0 \le b \le 0.9$, $0 \le c \le 0.5$, $0 \le d \le 0.5$, $0 \le e \le 0.1$); $Li_aNi_bCo_cMn_dG_eO_2$ ($0.90 \le a \le 1.8$, $0 \le b \le 0.9$, $0 \le c \le 0.5$, $0 \le d \le 0.5$, $0.001 \le e \le 0.1$); $Li_aNiG_bO_2$ ($0.90 \le a \le 1.8$, $0.001 \le b \le 0.1$); $Li_aCoG_bO_2$ ($0.90 \le a \le 1.8$, $0.001 \le b \le 0.1$); $Li_aMn_{1-b}G_bO_2$ ($0.90 \le a \le 1.8$, $0.001 \le b \le 0.1$); $Li_aMn_2G_bO_4$ ($0.90 \le a \le 1.8$, $0.001 \le b \le 0.1$); $Li_aMn_{1-g}G_gPO_4$ ($0.90 \le a \le 1.8$, $0 \le g \le 0.5$); $QO_2$; $QS_2$; $LiQS_2$; $V_2O_5$; $LiV_2O_5$; $LiZO_2$; $LiNiVO_4$; $Li_{(3-f)}J_2(PO_4)_3$ ($0 \le f \le 2$); $Li_{(3-f)}Fe_2(PO_4)_3$ ($0 \le f \le 2$); $Li_aFePO_4$ ($0.90 \le a \le 1.8$)

In the above chemical formulae, A is selected from Ni, Co, Mn, and a combination thereof; X is selected from Al, Ni, Co, Mn, Cr, Fe, Mg, Sr, V, a rare earth element, and a combination thereof; D is selected from O, F, S, P, and a combination thereof; E is selected from Co, Mn, and a combination thereof; T is selected from F, S, P, and a combination thereof; G is selected from Al, Cr, Mn, Fe, Mg, La, Ce, Sr, V, and a combination thereof; Q is selected from Ti, Mo, Mn, and a combination thereof; Z is selected from Cr, V, Fe, Sc, Y, and a combination thereof; and J is selected from V, Cr, Mn, Co, Ni, Cu, and a combination thereof.

Also, the compounds may have a coating layer on the surface, or may be mixed with another compound having a coating layer. The coating layer may include at least one coating element compound selected from the group consisting of an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive electrode active material by using these elements in the compound, and for example, the method may include any coating method such as spray coating, dipping, and the like, but is not illustrated in more detail since it is well-known in the related field.

In the positive electrode, an amount of the positive active material may be about 90 wt% to about 98 wt% based on the total weight of the positive active material layer.

In one embodiment, the positive active material layer may further include a binder and a conductive material. Herein, the amount of the binder and the conductive material may be about 1 wt% to about 5 wt%, respectively based on the total amount of the positive active material layer.

The binder improves binding properties of positive electrode active material particles with one another and with

a current collector. The examples of the binder may be polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene butadiene rubber, an acrylated styrene butadiene rubber, an epoxy resin, nylon, and the like, but are not limited thereto.

The conductive material is included to provide electrode conductivity, and any electrically conductive material may be used as a conductive material unless it causes a chemical change. Examples of the conductive material may be a carbon-based material such as natural graphite, artificial graphite, carbon black, acetylene black, ketjen black, a carbon fiber, and the like; a metal-based material of a metal powder or a metal fiber including copper, nickel, aluminium, silver, and the like; a conductive polymer such as a polyphenylene derivative; or a mixture there.

The current collector may be Al, but is not limited thereto.

The electrolyte includes a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may be methyl acetate, ethyl acetate, n-propyl acetate, dimethyl acetate, methyl propionate, ethyl propionate, decanolide, mevalonolactone, caprolactone, and the like. The ether-based solvent may be dibutyl ether, tetraglyme, diglyme, dimethoxyethane, 2-methyltetrahydrofuran, tetrahydrofuran, and the like. Furthermore, the ketone-based solvent may be cyclohexanone, and the like. The alcohol-based solvent may include ethyl alcohol, isopropyl alcohol, and the like, and examples of the aprotic solvent may include nitriles such as R-CN (where R is a C2 to C20 linear, branched, or cyclic hydrocarbon, or may include a double bond, an aromatic ring, or an ether bond), amides such as dimethylformamide, dioxolanes such as 1,3-dioxolane, sulfolanes, and the like.

The organic solvent may be used alone or in a mixture. When the organic solvent is used in a mixture, the mixture ratio may be controlled in accordance with a desirable battery performance.

The carbonate-based solvent may desirably include a mixture with a cyclic carbonate and a linear carbonate. The cyclic carbonate and linear carbonate are mixed together in a volume ratio of about 1:1 to about 1:9. When the mixture is used as an electrolyte, it may have enhanced performance.

The organic solvent may further include an aromatic hydrocarbon-based solvent as well as the carbonate-based solvent. The carbonate-based solvent and aromatic hydrocarbon-based solvent may be mixed together in a volume ratio of about 1:1 to about 30:1.

The aromatic hydrocarbon-based organic solvent may be an aromatic hydrocarbon-based compound represented by Chemical Formula 1.

[Chemical Formula 1]

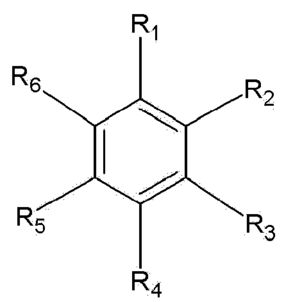

In Chemical Formula 1, $R_1$ to $R_6$ are the same or different and are selected from hydrogen, a halogen, a C1 to C10 alkyl group, a haloalkyl group, and a combination thereof.

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and combinations thereof.

The electrolyte may further include vinylethyl carbonate, vinylene carbonate, or an ethylene carbonate-based compound represented by Chemical Formula 2, as an additive for improving cycle life.

[Chemical Formula 2]

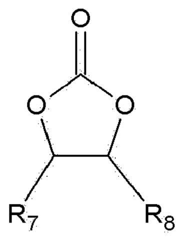

In Chemical Formula 2, $R_7$ and $R_8$ are the same or different and may be each independently hydrogen, a halogen, a cyano group (CN), a nitro group ($NO_2$), or a C1 to C5 fluoroalkyl group, provided that at least one of $R_7$ and $R_8$ is a halogen, a cyano group (CN), a nitro group ($NO_2$), or a C1 to C5 fluoroalkyl group, and $R_7$ and $R_8$ are not simultaneously hydrogen.

Examples of the ethylene carbonate-based compound may be difluoro ethylene carbonate, chloroethylene carbonate, dichloroethylene carbonate, bromoethylene carbonate, dibromoethylene carbonate, nitroethylene carbonate, cyanoethylene carbonate, fluoroethylene carbonate, and the like. An amount of the additive for improving the cycle-life characteristics may be used within an appropriate range.

The lithium salt dissolved in an organic solvent supplies a battery with lithium ions, basically operates the rechargeable lithium battery, and improves transportation of the lithium ions between a positive electrode and a negative electrode. Examples of the lithium salt include at least one supporting salt selected $LiPF_6$, $LiBF_4$, $LiSbF_6$, $LiAsF_6$, $LiN(SO_2C_2F_5)_2$, $Li(CF_3SO_2)_2N$, $LiN(SO_3C_2F_5)_2$, $LiF(SO_2)_2N$ (lithium bis(fluorosulfonyl)imide: LiFSI), $LiC_4F_9SO_3$, $LiClO_4$, $LiAlO_2$, $LiAlCl_4$, $LiPO_2F_2$, $LiN(C_xF_{2x+1}SO_2)(C_yF_{2y+1}SO_2)$, where x and y are natural numbers, for example, an integer of about 1 to about 20, lithium difluoro(bisoxolato) phosphate), LiCl, LiI, $LiB(C_2O_4)_2$ (lithium bis(oxalato) borate: LiBOB) and lithium difluoro(oxalato)borate (LiDFOB). A concentration of the lithium salt may range from about 0.1 M to about 2.0. When the lithium salt is included at the above concentration range, an electrolyte may have excellent performance and lithium ion mobility due to optimal electrolyte conductivity and viscosity.

A separator may be disposed between the positive electrode and the negative electrode depending on a type of a rechargeable lithium battery. The separator may use polyethylene, polypropylene, polyvinylidene fluoride or multilayers thereof having two or more layers and may be a mixed multilayer such as a polyethylene/polypropylene double-layered separator, a polyethylene/polypropylene/polyethylene triple-layered separator, a polypropylene/polyethylene/polypropylene triple-layered separator, and the like.

FIG. 1 is an exploded perspective view of a rechargeable lithium battery according to an embodiment of the present invention. The rechargeable lithium battery according to an embodiment is illustrated as a prismatic battery but is not limited thereto and may include variously-shaped batteries such as a cylindrical battery, a pouch battery, and the like.

Referring to FIG. 1, a rechargeable lithium battery 100 according to an embodiment may include an electrode assembly 40 manufactured by winding a separator 30 disposed between a positive electrode 10 and a negative electrode 20 and a case 50 housing the electrode assembly 40. An electrolyte (not shown) may be impregnated in the positive electrode 10, the negative electrode 20 and the separator 30.

Hereinafter, examples of the present invention and comparative examples are described. These examples, however, are not in any sense to be interpreted as limiting the scope of the invention.

(Example 1)

An artificial graphite active material and a Si-C composite active material were mixed at a weight ratio of 93 : 7 to prepare a negative active material. As the Si-C composite, a Si-carbon composite including a core including artificial graphite and silicon particles and a soft carbon coated on the surface of the core was used. The soft carbon coating layer had a thickness of 20 nm, and the silicon particles had an average particle diameter D50 of 100 nm.

96.38 wt% of the negative active material, 2.72 wt% of a styrene-butadiene rubber, and 0.9 wt% of a carboxymethyl cellulose aqueous solution (concentration of carboxymethyl cellulose aqueous solution: 1 wt%, solvent: water, and amount of carboxymethyl cellulose: 0.009 wt%) were mixed for 200 minutes, and distilled water was added to the resulting mixture to prepare a first negative active material layer slurry with a solid content of 48 wt%.

98.42 wt% of the negative active material, 0.68 wt% of a styrene-butadiene rubber, and 0.9 wt% of a carboxymethyl cellulose aqueous solution (concentration of carboxymethyl cellulose aqueous solution: 1 wt%, solvent: water, and amount of carboxymethyl cellulose: 0.009 wt%) were mixed for 200 minutes, and distilled water was added to the resulting mixture to prepare a second negative active material layer slurry with a solid content of 50 wt%.

An amount of the styrene-butadiene rubber in the first negative active material layer composition was four times the amount of the styrene-butadiene rubber in the second negative active material layer composition, and thus, an 80 : 20 weight ratio.

The capillary numbers of the first and the second negative active material layer slurries were calculated by Equation 1, and the results were 0.386 and 0.596.

The first negative active material layer slurry and the second negative active material layer slurry were coated and not coated on both sides of a Cu foil current collector, respectively, to alternatively form a coated region and an uncoated region, thereby obtaining a negative electrode.

The coated region was prepared by sequentially positioning the current collector, the first negative active material layer, and the second negative active material layer.

(Example 2)

A negative electrode was prepared by the same procedure as in Example 1, except for changing time for mixing and that is, except that 96.28 wt% of the negative active material used in Example 1, 2.72 wt% of a styrene-butadiene rubber, and 1.0 wt% of a carboxymethyl cellulose aqueous solution (concentration of carboxymethyl cellulose aqueous solution: 1 wt%, solvent: water, and amount of carboxymethyl cellulose: 0.01 wt%) were mixed for 200 minutes, and distilled water was added to the resulting mixture to prepare a first negative active material layer slurry with a solid content of 52 wt%, and

except for changing time for mixing and that is, except that 98.42 wt% of the negative active material used in Example 1, 0.68 wt% of a styrene-butadiene rubber, and 0.9 wt% of a carboxymethyl cellulose aqueous solution (concentration of carboxymethyl cellulose aqueous solution: 1 wt%, solvent: water, and amount of carboxymethyl cellulose: 0.009 wt%) were mixed for 200 minutes, and distilled water was added to the resulting mixture to prepare a second negative active material layer slurry with a solid content of 48 wt%.

Herein, the capillary number of the first negative active material layer slurry was 0.676, and the capillary number of the second active material layer slurry was 0.473.

(Example 3)

A negative electrode was prepared by the same procedure as in Example 1, except for changing time for mixing and that is, except that 96.38 wt% of the negative active material used in Example 1, 2.72 wt% of a styrene-butadiene rubber, and 0.9 wt% of a carboxymethyl cellulose aqueous solution (concentration of carboxymethyl cellulose aqueous solution: 1 wt%, solvent: water, and amount of carboxymethyl cellulose: 0.009 wt%) were mixed for 200 minutes, and distilled water was added to the resulting mixture to prepare a first negative active material layer slurry with a solid content of 50 wt%, and

except for changing time for mixing and that is, except that 98.32 wt% of the negative active material used in Example 1, 0.68 wt% of a styrene-butadiene rubber, and 1.0 wt% of a carboxymethyl cellulose aqueous solution (concentration of carboxymethyl cellulose aqueous solution: 1 wt%, solvent: water, and amount of carboxymethyl cellulose: 0.01 wt%) were mixed for 200 minutes, and distilled water was added to the resulting mixture to prepare a second negative active material layer slurry with a solid content of 52 wt%.

Herein, the capillary number of the first negative active material layer slurry was 0.507, and the capillary number of the second active material layer slurry was 0.662.

(Comparative Example 1)

A negative electrode was prepared by the same procedure as in Example 1, except for increasing time for mixing, and that is, except that 96.38 wt% of the negative active material used in Example 1, 2.72 wt% of a styrene-butadiene rubber, and 0.9 wt% of a carboxymethyl cellulose aqueous solution (concentration of carboxymethyl cellulose aqueous solution: 1 wt%, solvent: water, and amount of carboxymethyl cellulose: 0.009 wt%) were mixed for 250 minutes, and distilled water was added to the resulting mixture to prepare a first negative active material layer slurry with a solid content of 41 wt%, and

except for increasing time for mixing, and that is, except that 98.42 wt% of the negative active material used in Example 1, 0.68 wt% of a styrene-butadiene rubber, and 0.9 wt% of a carboxymethyl cellulose aqueous solution (concentration of carboxymethyl cellulose aqueous solution: 1 wt%, solvent: water, and amount of carboxymethyl cellulose: 0.009 wt%) were mixed for 250 minutes, and distilled water was added to the resulting mixture to prepare a second negative active material layer slurry with a solid content of 40 wt%.

Herein, the capillary number of the first negative active material layer slurry was 0.201, and the capillary number of the second active material layer slurry was 0.223.

(Comparative Example 2)

96.33 wt% of the negative active material used in Example 1, 2.72 wt% of a styrene-butadiene rubber, and 0.95 wt% of a carboxymethyl cellulose aqueous solution (concentration of carboxymethyl cellulose aqueous solution: 1 wt%, solvent: water, and amount of carboxymethyl cellulose: 0.0095 wt%) were mixed for 200 minutes, and distilled water was added to the resulting mixture to prepare a first negative active material layer slurry with a solid content of 44 wt%.

98.57 wt% of the negative active material, 0.68 wt% of a styrene-butadiene rubber and 0.75 wt% of a carboxylmethylcellulose solution were mixed for 250 minutes distilled water was added to the resulting mixture to prepare a second negative active material layer slurry with a solid content of 40 wt%.

A negative electrode was prepared by the same procedure as in Example 1, except for using the first negative active material layer slurry and the second negative active material layer slurry.

Herein, the capillary number of the first negative active material layer slurry was 0.209, and the capillary number of the second active material layer slurry was 0.296.

(Comparative Example 3)

96.38 wt% of the negative active material used in Example 1, 2.72 wt% of a styrene-butadiene rubber, and 0.9 wt% of a carboxymethyl cellulose aqueous solution (concentration of carboxymethyl cellulose aqueous solution: 1 wt%, solvent: water, and amount of carboxymethyl cellulose: 0.009 wt%) were mixed for 200 minutes, and distilled water was added to the resulting mixture to prepare a first negative active material layer slurry with a solid content of 40 wt%.

98.42 wt% of the negative active material used in Example 1, 0.68 wt% of a styrene-butadiene rubber, and 0.9 wt% of a carboxymethyl cellulose aqueous solution (concentration of carboxymethyl cellulose aqueous solution: 1 wt%, solvent: water, and amount of carboxymethyl cellulose: 0.009 wt%) were mixed for 200 minutes, and distilled water was added to the resulting mixture to prepare a second negative active material layer slurry with a solid content of 48 wt%.

A negative electrode was prepared by the same procedure as in Example 1, except for using the first negative active material layer slurry and the second negative active material layer slurry.

Herein, the capillary number of the first negative active material layer slurry was 0.146, and the capillary number of the second active material layer slurry was 0.377.

(Comparative Example 4)

A negative electrode was prepared by the same procedure as in Example 1, except for increasing time for mixing, and that is, except that 96.38 wt% of the negative active material used in Example 1, 2.72 wt% of a styrene-butadiene rubber, and 0.9 wt% of a carboxymethyl cellulose aqueous solution (concentration of carboxymethyl cellulose aqueous solution: 1 wt%, solvent: water, and amount of carboxymethyl cellulose: 0.009 wt%) were mixed for 250 minutes, and distilled water was added to the resulting mixture to prepare a first negative active material layer slurry with a solid content of 40 wt%, and,

except for increasing time for mixing, and that is, except that 98.42 wt% of the negative active material used in Example 1, 0.68 wt% of a styrene-butadiene rubber, and 0.9 wt% of a carboxymethyl cellulose aqueous solution (concentration of carboxymethyl cellulose aqueous solution: 1 wt%, solvent: water, and amount of carboxymethyl cellulose: 0.009 wt%) were mixed for 250 minutes, and distilled water was added to the resulting mixture to prepare a second negative active material layer slurry with a solid content of 40 wt%.

Herein, the capillary number of the first negative active material layer slurry was 0.227, and the capillary number of the second active material layer slurry was 0.217.

The capillary numbers (Ca) of the negative active material layer slurries of Examples 1 to 3 and Comparative Examples 1 to 4 were summarized in Table 1.

Table 1

| | Ca of first negative active material layer (lower) | Ca of second negative active material layer (upper) |
|---|---|---|
| Example 1 | 0.386 | 0.596 |

(continued)

| | Ca of first negative active material layer (lower) | Ca of second negative active material layer (upper) |
|---|---|---|
| Example 2 | 0.676 | 0.473 |
| Example 3 | 0.507 | 0.662 |
| Comparative Example 1 | 0.201 | 0.223 |
| Comparative Example 2 | 0.209 | 0.296 |
| Comparative Example 3 | 0.146 | 0.377 |
| Comparative Example 4 | 0.227 | 0.217 |

Experimental Example 1: Measurement of drag of end portion

In the negative electrodes of Examples 1 to 3 and Comparative Examples 1 to 4, drags of the end portion of the coating region on the both sides formed on the current collector, that is, the A plane and the B plane, was measured with a precision ruler. The results are shown in Table 2.

Even after the discharge of the slurry was completed, the second negative active material layer (upper) slurry that remained in the discharge part was longer pulled out to form the second negative active material layer (upper), so that any regions where the second negative active material layer slurry was only coated at the end of the coated region of first negative active material layer (lower) were formed shown in FIG. 2, and the length T was defined as a drag.

Table 2

| | Drag (mm) | |
|---|---|---|
| | A plane | B plane |
| Example 1 | 0.5 | 0.5 |
| Example 2 | 0.5 | 0.5 |
| Example 3 | 0.5 | 0.5 |
| Comparative Example 1 | 3.2 | 9.5 |
| Comparative Example 2 | 2 | 3.9 |
| Comparative Example 3 | 10 | 10 |
| Comparative Example 4 | 2 | 2.5 |

As shown in Table 2, the negative electrodes according to Examples 1 to 3 using the first negative active material layer slurry with the capillary number of 0.25 to 1.50 and the second negative active material layer slurry with the capillary number of 0.28 to 1.50 exhibited short drag length at both sides of the coating region and were identical to each other.

However, the negative electrodes according to Comparative Examples 1 to 4, which used either the first negative active material layer slurry with the capillary number of less than 0.25 or the second negative active material layer slurry with the capillary number of less than 0.28, exhibited very long drag lengths and different drag length at of both sides.

From the images shown in FIGS. 3 and 4, it can be seen that the negative electrode according to Example 1 rarely occurred drag and the negative electrode according to Comparative Example 1 severely occurred drag (FIG. 3: Example 1, FIG. 4: Comparative Example 1).

While this disclosure has been described in connection with what is presently considered to be practical example embodiments, it is to be understood that the invention is not limited to the disclosed embodiments, but, on the contrary, is intended to cover various modifications and equivalent arrangements included within the scope of the appended claims.

## Claims

1. A method of preparing a negative electrode for a rechargeable lithium battery, comprising preparing an active material layer on a current collector so that a coating portion in which an active material layer is formed and an uncoated region in which an active material is not formed are alternatively arranged,
wherein the coating portion in which the active material layer is formed is performed by coating a first negative active material layer composition having a capillary number of about 0.25 to about 1.50 on the current collector and coating a second negative active material layer composition having a capillary number of about 0.28 to about 1.50 on the first negative active material layer composition.

2. The method of preparing a negative electrode for a rechargeable lithium battery of claim 1, wherein the coating the first negative active material layer composition on the current collector and the coating the second negative active material layer composition on the first negative active material layer composition are simultaneously performed.

3. The method of preparing a negative electrode for a rechargeable lithium battery of claim 1 or claim 2, wherein the first negative active material layer composition has a solid content of about 42 wt% to about 80 wt% based on the total 100 wt%, of the first negative active material layer composition, and
the second negative active material layer composition has a solid content of about 41 wt% to about 80 wt% based on the total 100 wt%, of the second negative active material layer composition.

4. The method of preparing a negative electrode for a rechargeable lithium battery of any one of claims 1 to 3, wherein the first negative active material layer composition includes a first thickener and an amount of the first thickener is about 0.006 wt% to about 0.012 wt% based on the total 100 wt%, of the first negative active material layer composition, and
the second negative active material layer composition includes a second thickener and an amount of the second thickener is about 0.007 wt% to about 0.013 wt% based on the total 100 wt%, of the second negative active material layer composition.

5. The method of preparing a negative electrode for a rechargeable lithium battery of any one of claims 1 to 4, wherein the first negative active material layer composition has a capillary number of about 0.25 to about 0.82.

6. The method of preparing a negative electrode for a rechargeable lithium battery of any one of claims 1 to 5, wherein the second negative active material layer composition has a capillary number of about 0.28 to about 0.85.

7. The method of preparing a negative electrode for a rechargeable lithium battery of any one of claims 1 to 6, wherein a difference of the capillary number between the first negative active material layer composition and the second negative active material layer composition is about 0.03 to about 1.25.

8. A rechargeable lithium battery, comprising:

   a negative electrode prepared by the method of any one of claim 1 to claim 7;
   a positive electrode; and
   an electrolyte.

FIG. 1

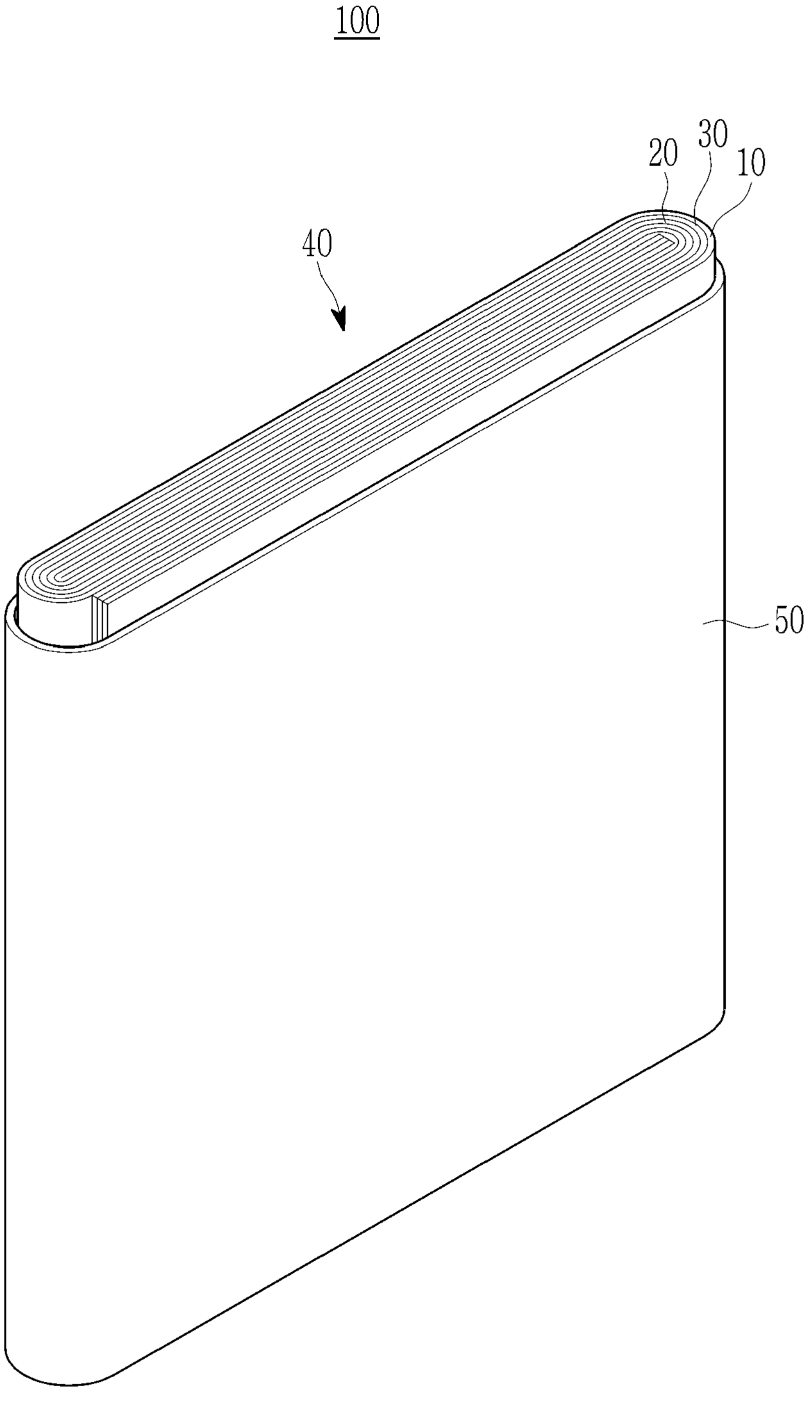

FIG. 2

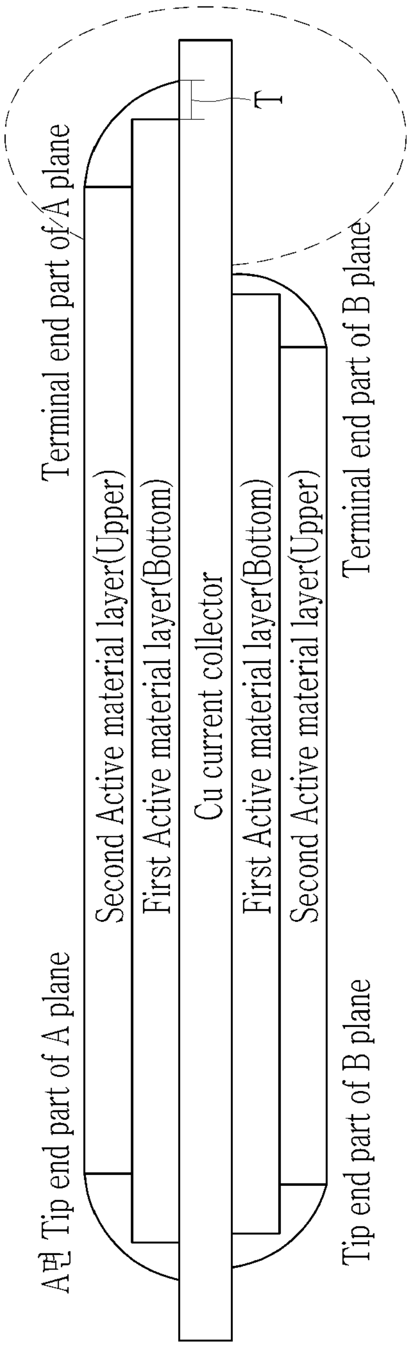
A편 Tip end part of A plane
Terminal end part of A plane
Second Active material layer(Upper)
First Active material layer(Bottom)
Cu current collector
First Active material layer(Bottom)
Second Active material layer(Upper)
T
Tip end part of B plane
Terminal end part of B plane

FIG. 3

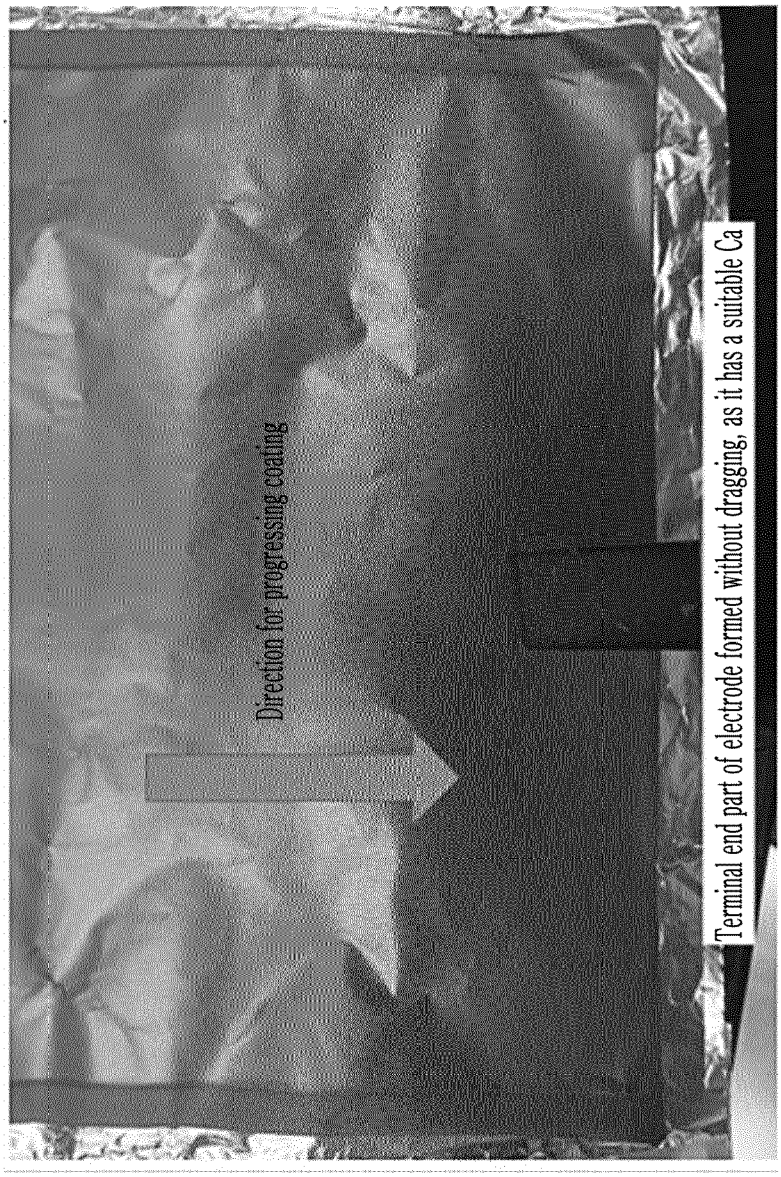
Direction for progressing coating
Terminal end part of electrode formed without dragging, as it has a suitable Ca

FIG. 4

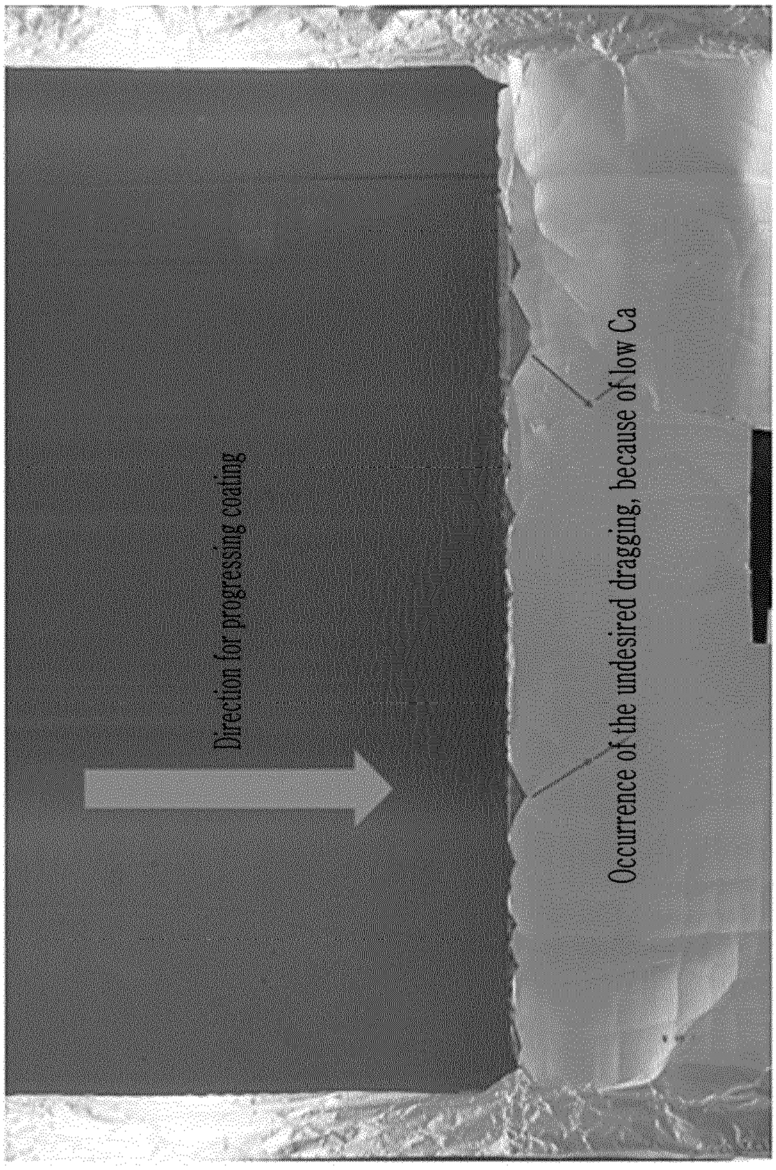
Direction for progressing coating
Occurrence of the undesired dragging, because of low Ca

Europäisches Patentamt
European Patent Office
Office européen des brevets

# EUROPEAN SEARCH REPORT

Application Number
EP 23 18 9319

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 930 046 A1 (SAMSUNG SDI CO LTD [KR]) 29 December 2021 (2021-12-29)<br>* claims 1-9 *<br>* paragraphs [0083] - [0091] *<br>----- | 1-8 | INV.<br>H01M4/04<br>H01M4/139<br>H01M4/36<br>H01M10/0525 |

| TECHNICAL FIELDS SEARCHED (IPC) |
|---|
| H01M |

The present search report has been drawn up for all claims

1

| Place of search | Date of completion of the search | Examiner |
|---|---|---|
| The Hague | 13 December 2023 | Gomes Pinto F., R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 23 18 9319

This annex lists the patent family members relating to the patent documents cited in the above-mentioned European search report. The members are as contained in the European Patent Office EDP file on
The European Patent Office is in no way liable for these particulars which are merely given for the purpose of information.

13-12-2023

| Patent document cited in search report | Publication date | Patent family member(s) | Publication date |
|---|---|---|---|
| EP 3930046 A1 | 29-12-2021 | CN 113851611 A | 28-12-2021 |
| | | EP 3930046 A1 | 29-12-2021 |
| | | JP 2022008268 A | 13-01-2022 |
| | | US 2021408551 A1 | 30-12-2021 |

EPO FORM P0459

For more details about this annex : see Official Journal of the European Patent Office, No. 12/82